# FASCICULE DE BREVET EUROPEEN

(11) **EP 1 151 856 B1**
(45) Date de publication et mention de la délivrance du brevet: **08.10.2003**
(21) Numéro de dépôt: 01450006.0
(22) Date de dépôt: 03.05.2001
(51) Int. Cl.: B32B 31/00, B29C 70/08, B29C 70/54, B29C 70/34

(54) **Procédé de fabrication d'un panneau en matériau composite a bandes raidisseurs et panneau ainsi obtenu**
Verfahren zur Herstellung einer mit Versteifungsrippen versehenen Platte aus Verbundwerkstoff und mit diesem Verfahren hergestellte Platte
Method of manufaturing a panel of composite material with stiffening ribs and panel obtained thereby

(30) Priorité: 05.05.2000 FR 0005798
(43) Date de publication de la demande: 07.11.2001
(73) Titulaire: AIRBUS France, 31060 Toulouse Cedex 03 (FR)
(72) Inventeur: Buge, Michel, 44230 Saint Sebastien Sur Loire (FR); Rambaud, Eric, 44840 Les Sorinieres (FR); Porte, Alain, 31770 Colomiers (FR); Legeay, Bruno, 44800 Saint Herblain (FR)
(74) Mandataire: Thébault, Jean-Louis

(56) Documents cités:
- EP-A- 0 650 825
- GB-A- 1 522 432
- US-A- 4 923 545

## Description

La présente invention a trait à la réalisation de panneaux en matériau composite munis de raidisseurs locaux, par la technique du drapage/moulage.

Cette technique qui consiste à draper sur un outillage approprié appelé moule des fibres préimprégnées de résine, à appliquer sur ces fibres un film ou vessie, à faire le vide entre la vessie et les fibres, puis à placer l'ensemble ainsi obtenu dans un autoclave pour y subir un cycle de polymérisation assurant la cuisson de la résine, permet d'obtenir des panneaux de formes et dimensions bien précises aptes à divers usages.

L'invention concerne plus particulièrement des panneaux en forme devant constituer la nacelle de moteurs d'aéronef.

Une telle nacelle est généralement constituée de plusieurs panneaux composites fabriqués en deux parties puis assemblés ensemble. La forme de ces panneaux est calculée par les spécialistes de l'aérodynamique afin de limiter la traînée à proximité de la voilure. En règle générale, elle est plutôt curviligne et de grande dimension. Lors de la fabrication de chaque panneau, il est important de respecter cette forme afin d'en conserver les formes et dimensions.

Afin de rigidifier la forme et de garantir le dimensionnement de ces panneaux, des raidisseurs locaux sont utilisés.

Différentes techniques sont actuellement appliquées, par exemple comme décrit dans EP-A-650 825 et le préambule de la revendication 1.

Le panneau peut être raidi par une structure alvéolaire continue, déposée sur l'ensemble de la surface du panneau. Cette structure alvéolaire est prise en sandwich entre deux couches de fibres ou de plis préimprégnés.

Dans le cas d'une monocuisson, lors de la fabrication d'une tel panneau, dès la mise sous vide, les plis de la couche de fibres préimprégnées ont tendance à s'affaisser dans les cellules ouvertes de la structure alvéolaire. En effet, tant que la température de polymérisation de la résine n'est pas atteinte, la consistance de ces tissus est molle. En fin de cycle, le panneau ainsi formé comporte des creux qui en modifient la forme aérodynamique.

Pour résoudre ces problèmes, il existe deux solutions
- utiliser une structure alvéolaire avec des cellules de petites dimensions afin que les plis de la couche de fibres ne puissent pas s'y affaisser. L'inconvénient majeur est le poids du panneau réalisé, car plus les cellules sont de petite taille et plus la densité de la structure est importante,
- fabriquer le panneau en plusieurs étapes. On cuit en premier lieu la couche de fibres préimprégnées, car une fois celles-ci durcies, la couche ne pourra plus s'affaisser dans les cellules de la structure alvéolaire. En deuxième cuisson, on adjoint la structure alvéolaire et la dernière couche. Ce procédé oblige à fabriquer le panneau en plusieurs étapes nécessitant un temps de réalisation assez long, ainsi qu'un nombre important d'outillages différents.

Par ailleurs, cette technique a l'inconvénient d'être difficilement réparable chez l'utilisateur, une fois le panneau endommagé. En cas de choc, de l'humidité risque de s'introduire dans la structure alvéolaire, dégradant les propriétés structurales de ladite structure et obligeant à une réparation très précise selon des règles très strictes.

Une autre technique consiste à utiliser des raidisseurs locaux, sous forme de bande de structure alvéolaire ou de bande de mousse. L'utilisation d'une structure alvéolaire entraîne les mêmes inconvénients, quoique atténués, que dans la technique précédente, à savoir : affaissement des plis de fibres, poids du panneau, difficultés de réparations, nécessité de plusieurs cycles de polymérisation, risque de prise d'humidité lors d'un choc.

La mousse a l'avantage d'éviter que les plis de fibres préimprégnées ne s'affaissent car elle ne comporte pas de cellules ouvertes. Elle comporte néanmoins un inconvénient majeur : les plis de fibres préimprégnées s'affaissent lors du refroidissement du panneau à cause de la différence de coefficient de dilatation entre lesdites fibres et la mousse. Ce problème existe d'ailleurs aussi avec la structure alvéolaire. En effet, les matériaux utilisés pour réaliser les bandes raidisseurs (mousse, structure alvéolaire, ...) ont, en général un coefficient de dilatation plus important que les matériaux préimprégnées. Dans l'autoclave, à la température de polymérisation, les plis de matériaux préimprégnés se solidifient alors que le matériau de la bande raidisseur se dilate. Lors du refroidissement de la pièce, ledit matériau se rétracte pour revenir à sa position initiale (avant réchauffement) et entraîne avec lui le matériau composite solidifié, provoquant son affaissement. En conséquence, de légers creux apparaissent sur le panneau ce qui modifie l'écoulement du fluide et génère de la traînée aérodynamique inacceptable. De plus, ces creux fragilisent le panneau en générant un début de flèche. Dans ce cas, la bande de mousse ou de structure a forcément un rôle structural pour compenser cet effort. C'est ce qui impose des règles strictes de réparation.

Il est possible d'éviter l'utilisation d'une structure alvéolaire en la remplaçant par des raidisseurs locaux en forme. Ces raidisseurs locaux peuvent avoir des formes différentes (Z, U, I, ...) en fonction de l'endroit où ils sont placés. ils sont préalablement réalisés en matériau composite, par la technique du drapage/moulage sur les outillage spécifiques à leur forme. Il faut donc autant d'outillages que de formes à réaliser. La fabrication du panneau se fait en deux étapes : cuisson de la couche de fibres préimprégnées puis collage des raidisseurs locaux.

Cette opération de collage nécessite un outillage très précis car il existe des problèmes d'adaptation entre les raidisseurs et le panneau, à savoir des problèmes de contraintes au niveau des points de contact. Cette technique génère des risques de décollements des raidisseurs, en plus des multiples opérations de polymérisation.

Ainsi, dans le contexte économique actuel, où l'on recherche la meilleure qualité au meilleur prix, les techniques précédentes bien qu'utilisées dans l'industrie ne donnent pas entière satifaction.

La présente invention vise à remédier aux inconvénients des techniques connues en proposant un procédé de fabrication de panneaux en matériau composite à bandes raidisseur par la technique du drapage/moulage/polymérisation, garantissant la forme et les dimensions des panneaux après démoulage notamment en évitant tout affaissement des fibres sur les bandes raidisseurs, tout en permettant des fabrications en un temps pouvant être très court et sans nécessiter de cycle de fabrication trop complexe.

A cet effet, l'invention a pour objet un procédé de fabrication d'un panneau en matériau composite à bandes raidisseurs, dans lequel on drape dans un moule aux forme et dimension du panneau à réaliser au moins un premier pli de fibres préimprégnées de résine, on met en place aux endroits désirés sur ledit pli au moins une bande raidisseur, on recouvre la bande raidisseur ainsi qu'une partie au moins de la surface restante dudit permier pli, d'au moins un second pli de fibres préimprégnées de résine, puis on met en place une vessie en recouvrement des éléments ci-dessus, on établit un vide approprié dans l'espace entre moule et vessie, on dispose ensuite l'ensemble dans un autoclave pour y subir un cycle de polymérisation préétabli de la résine, à pressions et températures appropriées à ladite résine et enfin, on démoule le panneau, caractérisé en ce que préalablement auxdites mises en place de la bande raidisseur et/ou du second pli, on interpose au moins une couche, film ou analogue d'un matériau non adhérent entre au moins une partie de la surface de la bande raidisseur et l'un et/ou l'autre desdits plis.

Avec un tel procédé, le matériau non adhérent, intercalé entre la couche de fibres préimprégnées et une bande raidisseur du type à structure alvéolaire, évite l'affaissement des plis dans les cellules de la structure alvéolaire. Il évite, de plus, lors de la cuisson, à la bande raidisseur de se solidariser de la couche de matériau composite. Ainsi, lors du refroidissement, le matériau utilisé pour la bande raidisseur peut se rétracter sans entraîner la couche solidifiée de matériau composite. La surface du panneau n'est donc pas modifiée, ce qui lui conserve sa forme aérodynamique.

Par ailleurs, la ou les bandes raidisseurs pouvant être totalement enveloppées dudit matériau non adhérent, il n'y a plus solidarisation entre les bandes et le matériau composite. Le panneau est ainsi indifférent à la dilatation des bandes et donc aux déformées qu'elle est susceptible d'engendrer.

De surcroît, les bandes raidisseurs n'étant plus travaillantes et n'ayant donc plus d'efforts à transmettre, tout matériau de faible densité mais capable néanmoins de tenir les températures et les pressions du cycle de polymérisation, peut être utilisé pour réaliser lesdites bandes. Elles peuvent ainsi être notamment en structure alvéolaire ou en mousse.

Il est également à noter qu'éventuellement, les bandes raidisseurs peuvent être après démoulage retirées du panneau puisqu'elles n'adhèrent pas au matériau composite.

Le procédé décrit ci-dessus dans le cadre d'une mise en oeuvre par monocuisson, se prête également à une cuisson en deux temps, à savoir une première cuisson du ou des plis superposés constituant la première couche de matériau composite à placer sur le fond du moule, afin de rigidifier cette première couche, puis une seconde cuisson après mise en place des bandes raidisseurs, couches non adhérentes, seconde couche de matériau composite, afin de rigidifier l'ensemble, chaque cuisson étant bien entendu réalisée après mise en place d'une vessie, mise sous vide, puis autoclavage.

Une telle polymérisation en deux temps est possible puisqu'il n'y a plus de risque d'affaissement des plis dus aux différents coefficients de dilatation des matériaux utilisés.

Le matériau non-adhérent est par exemple choisi dans le groupe comprenant le Téflon® et les composés à base de silicones.

L'invention a également pour objet les panneaux à bandes raidisseurs obtenus conformément au procédé.

D'autres caractéristiques et avantages ressortiront de la description qui va suivre de modes de mise en oeuvre du procédé de l'invention, description donnée à titre d'exemple uniquement et en regard du dessin annexé sur lequel :
- Figure 1 est un schéma illustrant la mise en place dans un moule des divers éléments constitutifs d'un panneau selon l'invention ;
- Figure 2 illustre le panneau issu de l'exemple de la figure 1, après polymérisation et démoulage, et
- Figures 3a à 3d illustrent schématiquement différents modes de placement d'une couche ou film de matériau non-adhérent autour de chaque bande raidisseur.

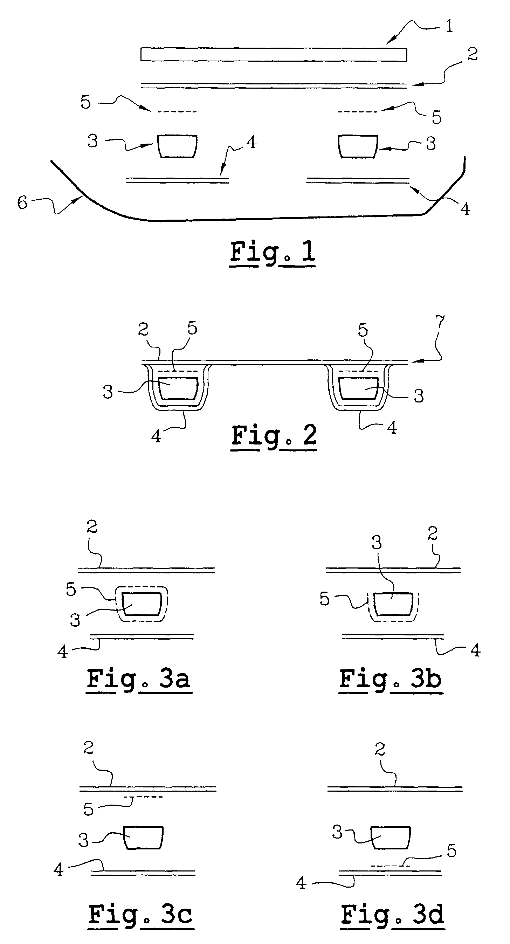

Sur la figure 1, on a représenté très schématiquement en 1 un moule destiné à la fabrication d'un panneau en matériau composite à deux bandes raidisseurs, de forme plane et de dimensions correspondant à celles du moule 1, qui est vu sur la tranche sur la figure, son ouverture étant tournée vers le bas.

En un premier temps, on place par drapage sur le fond de la cavité du moule 1 un ou plusieurs plis 2 de fibres préimprégnées de résine, aux dimensions appropriées, la face de l'empilage de plis tournée vers le fond du moule correspondant à la face extérieure du panneau à réaliser.

Les fibres sont des fibres de carbone, kevlar, verre ou tout autre matériau minéral ou organique, naturel ou synthétique, utilisable dans les applications envisagées, et sont préimprégnées d'une résine thermoplastique ou thermodurcissable appropriée.

Ensuite, on va procéder à la mise en place de deux bandes raidisseurs 3 et d'une couche 4 formée d'un ou plusieurs plis de fibres préimprégnées de résine, par exemple du même type que celui des fibres de la couche 2, avec interposition entre les bandes raidisseurs 3 et la couche 2 d'une couche, film, feuille ou enveloppe 5 d'un matériau non-adhérent.

Les bandes raidisseurs 3 sont par exemple des éléments allongés de section légèrement trapézoïdale, de longueur correspondant à celle du panneau à réaliser, constitués à la manière connue, d'une structure alvéolaire telle qu'un nid d'abeille, par exemple le matériau dénommé ROHACELL, ou une mousse, ou tout autre matériau approprié, de faible densité et capable de tenir les températures et pressions de polymérisation des résines des matériaux composites utilisés.

Le matériau non-adhérent 5 est constitué par exemple d'une feuille ou film de Téflon ou d'un matériau de la famille des silicones, interposé, comme illustré par la figure 1, entre la première couche 2 et la face des bandes raidisseurs 5 tournée vers ladite première couche, les dimensions de la feuille 5 correspondant à celles de ladite face des bandes.

On verra plus loin les modalités d'application des feuilles 5 en référence aux figure 3a à 3d.

Après mise en place des éléments 3 et 5 sur la couche 2, la couche interne du panneau, constituée par deux parties distinctes 4, est disposée en recouvrement total des bandes 3. Plus précisément, chaque partie 4 est dimensionnée de façon à pouvoir recouvrir totalement l'une des bandes 3 en débordant légèrement de chaque côté, c'est à dire en recouvrant la zone environnante de la face exposée de la couche 2 tout autour de chaque bande raidisseur.

Les deux parties 4 pourraient bien entendu ne faire qu'une et recouvrir à la fois les bandes 3 et toute la surface exposée restante de la couche 2.

Par ailleurs, la ou les parties 4 sont formées d'un ou plusieurs plis par exemple similaires à ceux de la couche 2.

L'ensemble est ensuite entièrement recouvert d'une vessie 6 et un vide prédéterminée est fait dans l'espace entre vessie 6 et moule 1, à la manière connue.

Le tout est ensuite placé en autoclave pour y subir un cycle de polymérisation de la résine des couches 2, 4 suivant un processus mettant en oeuvre des températures et pressions appropriées à la nature de la résine, à la manière connue.

Après polymérisation, le panneau 7 est démoulé et présente l'aspect illustré par la figure 2, le panneau étant vu sur la tranche.

Les bandes raidisseurs 3 permettent de rigidifier la forme du panneau 7 et de garantir son dimensionnement. Les bandes 3 assurent la mise en forme de la couche finale 4 de fibres préimprégnées en définissant des gouttières dont le rôle est de raidir le panneau 7. Il est à noter que la section légèrement trapézoïdale des bandes 3 contribue à mieux répartir la pression exercée par la vessie 6 qui s'appuie ainsi d'une manière homogène sur les bandes dans leur globalité et notamment sur les flancs latéraux en pente.

Une fois la couche 4 en forme, les bandes raidisseurs 3 n'ont plus d'utilité car elles sont non-travaillantes, n'étant plus solidaires de la couche principale 2 du panneau 7 du fait de l'écran de matière non-adhérente 5.

Ainsi, lors du refroidissement consécutif au passage en autoclave, le matériau utilisé pour les bandes raidisseurs 3 peut se rétracter sans entraîner la couche solidifiée de matériau composite 2. La surface du panneau 7 n'est donc pas modifiée, ce qui lui conserve sa forme aérodynamique.

Une autre conséquence du caractère non-travaillant des bandes raidisseurs 3 est la possibilité d'utiliser un matériau très léger de façon à ne pas trop alourdir le panneau.

La présence du matériau 5 évite également l'affaissement des plis de la couche 2 dans les cellules des bandes 3, lorsque ces dernières ont une structure alvéolaire, évitant ainsi l'apparition localisée de légers creux sur la surface externe du panneau 7.

Dans l'exemple des figures 1 et 2, le matériau non-adhérent 5 est interposé seulement entre la couche externe 2 du panneau et les bandes raidisseurs.

La feuille de matériau 5 peut être rendue adhésive sur une face ou sur les deux pour un positionnement précis des bandes raidisseurs 3 sur la couche 2.

Le matériau non-adhérent 5 peut être constitué par une couche pulvérisée au pistolet par exemple ou passé au pinceau comme une peinture.

Comme illustré par le figure 3a, le matériau non-adhérent 5, quel que soit sa nature ou son mode d'application, peut être appliqué sur tous les côtés de la bande raidisseur 3 en sorte de l'envelopper complètement.

Le matériau 5 selon la variante de la figure 3b est interposé entre la bande raidisseur 3 et la couche finale 4 de recouvrement de la bande.

La figure 3c illustre le cas de l'application de la couche 5 directement sur la couche de matériau composite 2, les dimensions de la couche 5 correspondant précisément à celles de la face en regard de la bande 3 afin d'éviter les problèmes d'adhérence avec la couche finale 4.

Enfin, la couche 5 peut être appliquée directement (figure 3d) sur la couche de matériau composite 4 recouvrant la bande raidisseur 3.

Il est à noter que les propriétés du matériau non-adhérent 5 permettent le retrait des bandes raidisseurs 3 une fois le panneau démoulé.

En effet, en intercalant entre les bandes raidisseurs 3 et les couches de fibres préimprégnées 2 et 4 deux couches, feuilles, ou films de matériau non-adhérent 5, il sera possible lorsque le panneau sera démoulé de pousser les bandes raidisseurs pour les faire glisser hors du panneau, l'un des fourreaux de matériau non adhérent demeurant solidaire de chaque bande raidisseur et l'autre fourreau demeurant en place dans le logement de la bande.

La technique du moulage/drapage permet d'utiliser un moule délimitant une cavité dont la forme et les dimensions correspondent à celles du panneau à fabriquer.

Cette forme et ces dimensions peuvent être quelconques sans sortir du cadre de l'invention.

En particulier, le procédé de l'invention permet de fabriquer aussi bien un panneau plan qu'un panneau ayant des formes plus complexes.

Les plis de fibres constituant les couches 2 et 4 sont des plis de tissu ou de nappes de fibres.

Afin, d'améliorer l'état de surface du panneau 7, on peut appliquer un film de surfaçage, par exemple un pli de résine, sur la surface externe du panneau exposé à l'écoulement aérodynamique afin de niveler les micro-défauts et de boucher les éventuels désaffleurements qui peuvent apparaître lors de la fabrication du panneau, grâce à l'apport de résine supplémentaire résultant du film de surfaçage.

Le procédé décrit plus haut permet de réaliser un panneau 7 en une seule cuisson, procurant ainsi un gain de temps de fabrication appréciable.

La monocuisson permet aussi d'éviter l'apparition de contraintes parasites au niveau des points de contact. En effet, les différentes couches ne se durcissent que lorsque la cuisson est terminée, ce qui favorise le contact entre les différents éléments, à savoir les plis de matériaux préimprégnés (2, 4), les bandes raidisseurs 3 et les couches de matériau non-adhérent 5.

Cependant, le procédé de l'invention peut être mis en oeuvre en opérant deux cuissons, l'une visant la couche externe 2 du panneau, à un ou plusieurs plis superposés et l'autre étant opérée après mise place des bandes raidisseurs 3, du matériau non-adhérent 5 et de la ou des couches de recouvrement 4, aux fins de rigidification de l'ensemble.

Une telle cuisson en deux temps est possible puisqu'il n'y a plus de risque d'affaissement des plis de matériau composite dû aux différents coefficients de dilatation des matériaux utilisés.

Enfin, l'invention n'est évidemment pas limitée aux modes de mise en oeuvre décrits et représentés ci-dessus mais en couvre au contraire toutes les variantes, notamment en ce qui concerne les formes et dimensions du panneau 7, des bandes raidisseurs 3, la nature et le nombre de plis des couches 2 et 4 et les natures et modes d'applications du matériau non-adhérent interposé entre bandes raidisseurs 3 et matériau composite (2, 4).

## Revendications

1. Procédé de fabrication d'un panneau (7) en matériau composite à bandes raidisseurs (3), dans lequel on drape dans un moule (1) aux forme et dimension du panneau à réaliser au moins un premier pli (2) de fibres préimprégnées de résine, on met en place aux endroits désirés sur ledit pli (2) au moins une bande raidisseur (3), on recouvre la bande raidisseur (3) ainsi qu'une partie au moins de la surface restante dudit premier pli (2), d'au moins un second pli (4) de fibres préimprégnées de résine, puis on met en place une vessie (6) en recouvrement des éléments ci-dessus, on établit un vide approprié dans l'espace entre moule (1) et vessie (6), on dispose ensuite l'ensemble dans un autoclave pour y subir un cycle de polymérisation préétabli de la résine, à pressions et températures appropriées à ladite résine et enfin, on démoule le panneau, **caractérisé en ce que** préalablement auxdites mises en place de la bande raidisseur (3) et/ou du second pli (4), on interpose au moins une couche, film ou analogue (5) d'un matériau non adhérent entre au moins une partie de la surface de la bande raidisseur (3) et l'un et/ou l'autre desdits plis (2, 4).

2. Procédé suivant la revendication 1, **caractérisé en ce que** chaque bande raidisseur (3) est enveloppée totalement d'au moins une couche, feuille ou analogue (5) de matériau non adhérent.

3. Procédé suivant la revendication 2, **caractérisé en ce que** chaque bande raidisseur (3) est entourée totalement de ladite couche ou analogue (5) et est extraite du panneau (7) après démoulage.

4. Procédé suivant l'une des revendications 1 à 3, **caractérisé en ce que** la couche de matériau composite constituée par ledit ou lesdits premiers plis de fibres préimprégnées est soumise à une cuisson avant la mise en place desdites bandes raidisseurs (3), couche ou analogue (5) de matériau non-adhérent et second(s) pli(s).

5. Procédé suivant l'une des revendications 1 à 4, **caractérisé en ce que** le matériau non-adhérent (5) est choisi dans le groupe comprenant le Téflon et les composés de la famille des silicones.

6. Procédé suivant l'une des revendications 1 à 5, **caractérisé en ce que** les bandes raidisseurs (3) sont réalisées dans un matériau choisi dans le groupe comprenant les nids d'abeille et les mousses.

7. Procédé suivant l'une des revendications 1 à 6, **caractérisé en ce qu'**entre le moule (1) et ledit premier pli (2), on interpose un film de surfaçage.

## Patentansprüche

1. Verfahren zur Herstellung einer Platte (7) aus Verbundmaterial mit Versteifungsbändern (3), bei dem in einer Gießform (1) mit der Form und den Abmessungen der zu verwirklichenden Platte wenigstens eine erste Lage (2) aus vorimprägnierten Harzfasern angeordnet wird, an den gewünschten Stellen auf der Lage (2) wenigstens ein Versteifungsband (3) angeordnet, das Versteifungsband (3) sowie wenigstens ein Teil der verbleibenden Oberfläche der ersten Lage (2) mit wenigstens einer zweiten Lage (4) aus vorimprägnierten Harzfasern überzogen, anschließend darauf eine die Elemente abdeckende Blase (6) angeordnet, in dem Raum zwischen der Gießform (1) und der Blase (6) ein geeigneter Unterdruck erzeugt, anschließend die Gesamtheit in einem Autoklaven angeordnet wird, damit sie hier einem im voraus festgelegten Zyklus zur Polymerisation des Harzes mit für das Harz geeigneten Drücken und Temperaturen unterworfen wird, und die Platte schließlich aus der Form entnommen wird, **dadurch gekennzeichnet, daß** vor dem Anordnen des Versteifungsbandes (3) und/oder der zweiten Lage (4) wenigstens eine Schicht, ein Film oder dergleichen (5) aus einem nicht haftenden Material wenigstens zwischen einen Teil der Oberfläche des Versteifungsbandes (3) und der einen und/oder der anderen der Lagen (2, 4) eingefügt wird.

2. Verfahren nach Anspruch 1, **dadurch gekennzeichnet, daß** jedes Versteifungsband (3) vollständig mit einer Schicht, einer Folie oder dergleichen (5) aus nicht haftendem Material umhüllt ist.

3. Verfahren nach Anspruch 2, **dadurch gekennzeichnet, daß** jedes Versteifungsband (3) von der Schicht oder dergleichen (5) vollständig umgeben ist und nach dem Entnehmen aus der Gießform aus der Platte (7) herausgezogen wird.

4. Verfahren nach einem der Ansprüche 1 bis 3, **dadurch gekennzeichnet, daß** die Schicht aus Verbundmaterial, die durch die erste(n) Lage(n) aus vorimprägnierten Fasern gebildet ist, vor der Anordnung der Versteifungsbänder (3), der Schicht oder dergleichen (5) aus nicht haftendem Material und der zweiten Lage(n) einer Aushärtung unterworfen wird.

5. Verfahren nach einem der Ansprüche 1 bis 4, **dadurch gekennzeichnet, daß** das nicht haftende Material (5) aus der Gruppe gewählt ist. die Teflon und Verbindungen der Familie der Silikone umfaßt.

6. Verfahren nach einem der Ansprüche 1 bis 5, **dadurch gekennzeichnet, daß** die Versteifungsbänder (3) aus einem Material hergestellt sind, das aus der Gruppe gewählt ist, die Bienenwaben und Schaumstoffe umfaßt.

7. Verfahren nach einem der Ansprüche 1 bis 6, **dadurch gekennzeichnet, daß** zwischen die Gießform (1) und die erste Lage (2) ein Oberflächenbehandlungsfilm eingefügt wird.

## Claims

1. A method of manufacturing a panel (7) made from composite material with stiffening strips (3), in which at least one first ply (2) of fibres preimpregnated with resin is draped in a mould (1) to the shape and size of the panel to be produced, at least one stiffening strip (3) is put in place at the required points on said ply (2), the stiffening strip (3) and at least some of the remaining surfaces of said first ply (2) is covered with at least one second ply (4) of fibres preimpregnated with resin, then a bladder (6) is put in place covering the above elements, a suitable vacuum is established in the space between the mould (1) and bladder (6), next the assembly is disposed in an autoclave in order to undergo therein a pre-established cycle of polymerisation of the resin, at pressures and temperatures appropriate to said resin, and finally the panel is stripped from the mould, **characterised in that**, prior to said fitting of the stiffening strip (3) and/or of the second ply (4), at least one layer, film or the like (5) of a non-adherent material is interposed between at least part of the surface of the stiffening strip (3) and one or other or both of said plies (2, 4).

2. A method according to claim 1, **characterised in that** each stiffening strip (3) is completely enclosed in at least one layer, sheet or the like (5) of non-adherent material.

3. A method according to claim 2, **characterised in that** each stiffening strip (3) is completely surrounded by said layer or the like (5) and is extracted from the panel (7) after removal from the mould.

4. A method according to one of claims 1 to 3, **characterised in that** the layer of composite material formed by said first ply or plies of preimpregnated fibres is subjected to curing before the fitting of said stiffening strips (3), layer or the like (5) of non-adherent material and second ply or plies.

5. A method according to one of claims 1 to 4, **characterised in that** the non-adherent material (5) is chosen from the group comprising Teflon and compounds in the silicone family.

6. A method according to one of claims 1 to 5, **characterised in that** the stiffening strips (3) are produced from a material chosen from the group comprising honeycombs and foams.

7. A method according to one of claims 1 to 6, **characterised in that** a surfacing film is interposed between the mould (1) and said first ply (2).
